# EUROPÄISCHE PATENTANMELDUNG

(11) **EP 0 813 988 A2**
(43) Veröffentlichungstag der Anmeldung: **29.12.1997**
(21) Anmeldenummer: 97103214.9
(22) Anmeldetag: 27.02.1997
(51) Int. Cl.: B60K 31/00

(54) **Verfahren zur Abstandsregelung für ein Fahrzeug**

(30) Priorität: 20.06.1996 DE 19624616
(71) Anmelder: Volkswagen Aktiengesellschaft, 38436 Wolfsburg (DE)
(72) Erfinder: Andreas, Peter, Dipl.-Ing., 38518 Gifhorn (DE); Holze, Raimond, Dipl.-Ing., 38446 Wolfsburg (DE); Weisser, Hubert, Dr., 38165 Lehre (DE); Lissel, Ernst, Dipl.-Ing., 38442 Wolfsburg (DE)

(57) **Zusammenfassung**

Es wird ein Verfahren zur Abstandsregelung für ein Fahrzeug, bei dem zumindest in Abhängigkeit der momentanen Fahrgeschwindigkeit des Fahrzeuges ein Sollabstand (aₛₒₗₗ) zu einem vor dem Fahrzeug befindlichen Objekt ermittelt wird, beschrieben.

Zur Erhöhung der Akzeptanz des Fahrzeugführers für die Abstandsregelung wird gemäß der Erfindung der aufgrund der momentanen Fahrgeschwindigkeit (vₑ) des Kraftfahrzeuges ermittelte Sollabstand (aₛₒₗₗ) derart manuell verändert, daß eine vorgebbare Folgezeit (t_{folg}) zum vorausfahrenden Fahrzeug eingestellt wird und zur Berechnung des Sollabstandes (aₛₒₗₗ) verwendet wird. Dabei ist sowohl eine fahrerindividuelle als auch eine witterungs- und/oder straßenzustandsabhängige Einstellung denkbar.

## Beschreibung

Die Erfindung betrifft ein Verfahren zur Abstandsregelung für ein Fahrzeug, bei dem zumindest in Abhängigkeit der momentanen Fahrgeschwindigkeit des Fahrzeuges ein Sollabstand zu einem vor dem Fahrzeug befindlichen Objekt ermittelt wird.

In der deutschen Offenlegungsschrift DE 42 00 694 A1 ist ein Verfahren zur Geschwindigkeits- und Abstandsregelung eines Fahrzeuges beschrieben. Bei dem bekannten Verfahren wird der aktuelle Abstand sowie die momentane Geschwindigkeit erfaßt und daraus die Sollwerte für den Abstand zu dem vor dem Fahrzeug befindlichen Objekt und die Fahrgeschwindigkeit ermittelt und eingestellt. Das Problem liegt dabei darin, daß Abstandsregelung als fahrerunterstützende Systeme konzipiert werden, deren Akzeptanz durch den Fahrzeugführer davon abhängt, wie sehr das Regelverhalten seinem eigenen Fahrverhalten, insbesondere bei der Einhaltung des Abstandes zum vorausfahrenden Kraftfahrzeug, ähnelt.

Zur Lösung des Problems wird in der Veröffentlichung "Abstandsregelung von Fahrzeugen mit Fuzzy-Control", Tagungsband der 3. Dortmunder Fuzzy-Tage, Reihe Informatik Aktuell, Springer Verlag, 1993 vorgeschlagen, anstelle eines fest vorgegebenen Sollabstandes, ein Abstandsmodell zu bestimmen, das vom Fahrertyp und der Witterung abhängt. Der Fahrertyp soll dabei über eine externer Sensorik ermittelt werden, wobei eine Möglichkeit zur zuverlässigen automatischen Fahrertyperkennung nicht angegeben wird.

Dementsprechend besteht die Aufgabe der Erfindung darin, ein Verfahren zur Abstandsregelung zu schaffen, dessen Regelverhalten auf das Fahrverhalten des Fahrzeugführers abgestimmt werden kann und dessen Akzeptanz durch den Fahrzeugführer dadurch erhöht wird.

Die Aufgabe wird durch ein Verfahren nach Anspruch 1 oder eine Vorrichtung nach Anspruch 6 gelöst. Vorteilhafte Weiterbildungen sind in den Unteransprüchen dargestellt.

Gemäß der Erfindung wird der aufgrund der momentanen Fahrgeschwindigkeit des Kraftfahrzeuges ermittelte Sollabstand derart manuell verändert, daß eine vorgebbare Folgezeit zum vorausfahrenden Fahrzeug eingestellt wird und zur Berechnung des Sollabstandes verwendet wird. Dabei ist sowohl eine fahrerindividuelle als auch eine witterungs- und/oder straßenzustandsabhängige Einstellung denkbar.

Jeder Fahrzeugführer hält je nach Typ zum vorausfahrenden Fahrzeug geschwindigkeitsabhängig einen anderen Abstand. Ein sportlicher Fahrzeugführer wird die ihm gegebenen Grenzen eher voll ausnutzen, also die Folgezeit, die den geschwindigkeitsabhängigen Abstand zum vorausfahrenden Fahrzeug wiedergibt, so klein wie möglich halten. Ein defensiv fahrender Fahrzeugführer wird eher eine längere Folgezeit, also einen größeren Abstand, wählen. Das erfindungsgemäße Verfahren wird durch die manuelle Veränderung der Folgezeit zum vorausfahrenden Fahrzeug und der Berechnung des Sollabstandes aufgrund unterschiedlicher Folgezeiten diesem Umstand gerecht.

Ein weiterer Vorteil des erfindungsgemäßen Verfahrens besteht darin, daß ein Fahrzeugführer durch die Veränderung der Folgezeit seinen Sollabstand den Straßen- bzw. Sichtverhältnissen anpassen kann. Die Veränderung der Folgezeit kann sowohl vor der Aktivierung der Abstandsregelung als auch während der Abstandsregelung erfolgen.

Zur manuellen Einstellung der Folgezeit ist gemäß der Erfindung im Fahrzeug ein mehrstufig oder kontinuierlich verstellbares Schaltmittel vorgesehen.

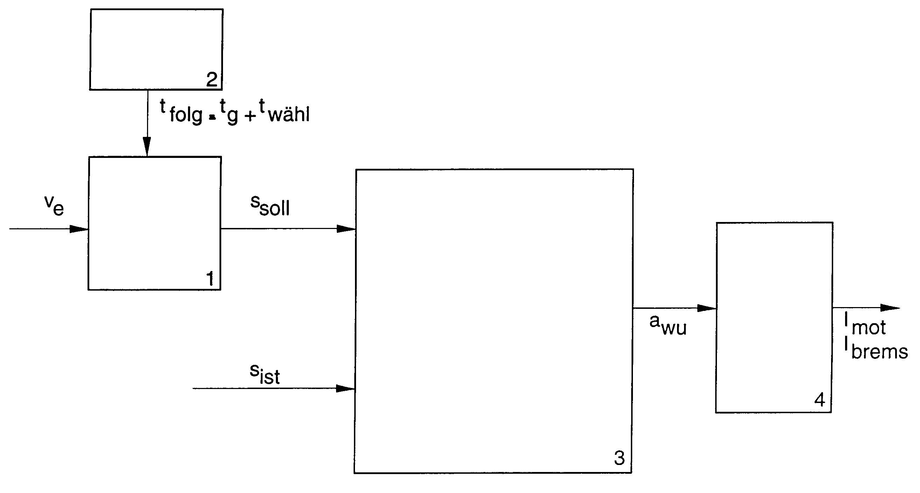

Nachfolgend wird die Erfindung anhand eines Ausführungsbeispiels näher beschrieben. Die Zeichnung zeigt ein Blockschaltbild einer Einrichtung zur Durchführung des erfindungsgemäßen Verfahrens zur Abstandsregelung.

Der für die Abstandsregelung notwendige Sollabstand sₛₒₗₗ wird in der Einrichtung 1 aus der momentanen Fahrgeschwindigkeit vₑ des Kraftfahrzeuges und einer Folgezeit t_{folg} gerechnet. In bekannten Abstandsregelungen ist diese Folgezeit t_{folg} konstant. Bei der Erfindung ist ein mehrstufiges Schaltmittel 2 vorgesehen, dessen Stufen eine bestimmte Folgezeit t_{folg} zugeordnet ist, wobei sich diese Folgezeit zumindest aus einem den physikalischen Grenzen gerechtwerdenden Zeitanteil t_{g} und einem variablen Zeitanteil t_{wähl} zusammensetzt. Über das Schaltmittel 2 ist es dem Fahrzeugführer also möglich, den Sollabstand entsprechend der Stufen des Schaltmittels seinen Wünschen anzupassen.

Der einzuregelnde Sollabstand sₛₒₗₗ und der momentane Istabstand sᵢₛₜ werden nun einer Regeleinrichtung 3 zugeleitet, die zumindest aus den beiden Eingangsgrößen eine Wunschbeschleunigung a_{wu} bildet, auf deren Grundlage in der Einrichtung 4 die Stellgrößen Iₘₒₜ, I_{brems} für die Antriebsmaschine und/oder Bremsanlage gebildet werden.

### BEZUGSZEICHENLISTE

- 1: Einrichtung
- 2: Schaltmittel
- 3: Regeleinrichtung
- 4: Einrichtung
- t_{folg}: Folgezeit
- t_{g}: Zeitanteil
- t_{wähl}: variabler Zeitanteil
- vₑ: momentane Fahrgeschwindigkeit
- sₛₒₗₗ: Sollabstand
- sᵢₛₜ: Istabstand
- a_{wu}: Wunschbeschleunigung
- Iₘₒₜ: Stellgröße
- I_{brems}: Stellgröße

## Patentansprüche

1. Verfahren zur Abstandsregelung für ein Fahrzeug, bei dem zumindest in Abhängigkeit der momentanen Fahrgeschwindigkeit des Fahrzeuges ein Sollabstand zu einem vorausfahrenden Fahrzeug ermittelt wird, dadurch gekennzeichnet, daß der Sollabstand (sₛₒₗₗ) derart veränderbar ist, daß eine vorgebbare Folgezeit (t_{folg}) zum vorausfahrenden Fahrzeug manuell eingestellt wird.

2. Verfahren nach Anspruch 1, dadurch gekennzeichnet, daß die manuell vorgebbare Folgezeit zum vorausfahrenden Fahrzeug fahrerindividuell eingestellt wird.

3. Verfahren nach Anspruch 1 oder 2, dadurch gekennzeichnet, daß die Folgezeit (t_{folg}) witterungs- und/oder straßenzustandsabhängig eingestellt wird.

4. Verfahren nach einem der Ansprüche 1 bis 3, dadurch gekennzeichnet, daß die Folgezeit (t_{folg}) vor der Aktivierung der Abstandsregelung eingestellt wird.

5. Verfahren nach einem der Ansprüche 1 bis 4, dadurch gekennzeichnet, daß die Folgezeit (t_{folg}) während der Abstandsregelung eingestellt wird.

6. Vorrichtung zur Durchführung des Verfahrens nach einem der Ansprüche 1 bis 5, dadurch gekennzeichnet, daß im Fahrzeug zumindest ein mehrstufig oder kontinuierlich einstellbares Schaltmittel (2) zur Vorgabe unterschiedlicher Folgezeiten (t_{folg}) vorgesehen ist.
